# EUROPEAN PATENT SPECIFICATION

(11) **EP 4 258 511 B1**
(45) Date of publication and mention of the grant of the patent: **28.01.2026**
(21) Application number: 22902454.2
(22) Date of filing: 29.12.2022
(51) Int. Cl.: H02J 7/00, H02H 7/18

(54) **OVER-DISCHARGE PROTECTION CIRCUIT, BATTERY PROTECTION BOARD, AND ELECTRONIC DEVICE**
ÜBERENTLADUNGSSCHUTZSCHALTUNG, BATTERIESCHUTZPLATTE UND ELEKTRONISCHE VORRICHTUNG
CIRCUIT DE PROTECTION CONTRE LA DÉCHARGE EXCESSIVE, CARTE DE PROTECTION DE BATTERIE, ET DISPOSITIF ÉLECTRONIQUE

(30) Priority: 25.02.2022 CN 202210174273
(43) Date of publication of application: 11.10.2023
(73) Proprietor: Honor Device Co., Ltd., Shenzhen, Guangdong 518040 (CN)
(72) Inventor: CAO, Lei, Shenzhen, Guangdong 518040 (CN); ZHU, Chen, Shenzhen, Guangdong 518040 (CN); HUANG, Ting, Shenzhen, Guangdong 518040 (CN); ZHOU, Haibin, Shenzhen, Guangdong 518040 (CN)
(74) Representative: Beder, Jens
(86) International application number: PCT/CN2022/143351
(87) International publication number: WO 2023/160235

(56) References cited:
- EP-A1- 3 902 078
- CN-A- 104 600 676
- CN-A- 105 939 039
- CN-A- 107 332 319
- CN-A- 107 332 319
- CN-A- 114 243 870
- CN-A- 114 256 939
- CN-U- 204 464 971
- US-A1- 2017 170 653
- US-B2- 10 516 276

## Description

### TECHNICAL FIELD

This application relates to the field of charging and discharging technologies, and in particular, to an over-discharge protection circuit, a battery protection board, and an electronic device.

### BACKGROUND

After an electronic device (for example, a mobile phone) is turned off, an electric circuit in the electronic device still exists as impedance, resulting in battery leakage. If a leakage time is long enough, battery over-discharge (referred to as over-discharge for short) may occur. This easily results in battery damage.

CN 114 243 870 A, EP 3 902 078 A1, CN 107 332 319 A and US 10 516 276 B2 disclose battery protection circuits comprising at least one switch that is connected to the negative tab of the battery and at least one corresponding controller for controlling switching based on the battery state.

### SUMMARY

This application provides an over-discharge protection circuit and an electronic device according to the enclosed independent claims, to solve a problem of battery over-discharge after the electronic device is turned off, and reduce a battery loss after the electronic device is turned off. The invention is defined in the appended claims. Advantageous features of the present invention are defined in the corresponding subclaims.

According to a first aspect, an embodiment of this application provides an overdischarge protection circuit. The over-discharge protection circuit is used in an electronic device.
The electronic device includes a battery and a battery power acquisition circuit, a first end and a second end of the battery power acquisition circuit are configured to sample power of the battery, the second end is grounded through a voltage-regulator tube, and the over-discharge protection circuit includes:

A first end of the over-discharge protection circuit is configured to connect a positive tab of the battery, and a second end of the over-discharge protection circuit is configured to connect a negative tab of the battery. A third end and a fourth end of the over-discharge protection circuit are configured to correspondingly connect the first end and the second end of the battery power acquisition circuit.

The first end of the over-discharge protection circuit is connected to the third end of the over-discharge protection circuit.

The second end of the over-discharge protection circuit is connected to the fourth end of the over-discharge protection circuit through a first switch.

A first control module is connected to a first control end of the first switch, and the first control module is configured to: after the electronic device is turned off, control the first switch to be turned off when a voltage of the battery is lower than a preset first voltage threshold, and control the first switch to be turned on when the voltage of the battery is not lower than the preset first voltage threshold.

In the circuit, the first control module is configured to: after the electronic device is turned off, control the first switch to be turned off when the voltage of the battery is lower than the preset first voltage threshold, to implement over-discharge protection of the battery, which can solve a problem of battery over-discharge after the electronic device is turned off, and reduce a battery loss after the electronic device is turned off.

In a possible implementation, the over-discharge protection circuit further includes:

The first end of the over-discharge protection circuit is connected to a fifth end of the over-discharge protection circuit, and the second end of the over-discharge protection circuit is connected to a sixth end of the over-discharge protection circuit through a second switch. The fifth end and the sixth end of the over-discharge protection circuit are configured to supply power to an electric circuit of the electronic device.

A second control module is connected to a first control end of the second switch, and the second control module is configured to: after the electronic device is turned off, control the second switch to be turned off when the voltage of the battery is lower than a preset second voltage threshold, and control the second switch to be turned on when the voltage of the battery is not lower than the preset second voltage threshold.

In a possible implementation, the over-discharge protection circuit further includes: a third switch.

The first end of the over-discharge protection circuit is connected to a fifth end of the over-discharge protection circuit, and the second end of the over-discharge protection circuit is connected to the fifth end of the over-discharge protection circuit through the third switch.

The first control module is connected to a first control end of the third switch, and the first control module is configured to: after the electronic device is turned off, control the third switch to be turned off when the voltage of the battery is lower than the preset first voltage threshold, and control the third switch to be turned on when the voltage of the battery is not lower than the preset first voltage threshold.

In a possible implementation, that the second end of the over-discharge protection circuit is connected to the fourth end of the over-discharge protection circuit through a first switch includes:

The second end of the over-discharge protection circuit is connected to the fourth end of the over-discharge protection circuit through the first switch and a first resistor that are connected in series.

In a possible implementation, the first switch includes: an NMOS transistor.

A source of the NMOS transistor is connected to the second end of the over-discharge protection circuit, a drain of the NMOS transistor is connected to the fourth end of the over-discharge protection circuit, and a gate of the NMOS transistor is connected to the first control module.

In a possible implementation, the first control module includes:

A first pin of a control chip is configured to connect the positive tab of the battery, a second pin of the control chip is grounded, and a third pin of the control chip is connected to the first control end of the first switch.

The control chip is configured to: after the electronic device is turned off, output a first voltage signal from the third pin to the first control end of the first switch when a voltage of the first pin is not less than the preset first voltage threshold, where the first voltage signal is used for controlling the first switch to be turned on; and output a second voltage signal from the third pin to the first control end of the first switch when the voltage of the first pin is less than the preset first voltage threshold, where the second voltage signal is used for controlling the first switch to be turned off.

In a possible implementation, the first switch further includes: A first capacitor is connected in series between the source and the drain of the NMOS transistor.

In a possible implementation, that the first control module is connected to a first control end of the first switch includes:

The first control module is connected to the first control end of the first switch through a first resistor.

In a possible implementation, the first voltage threshold is the same as the second voltage threshold.

In a possible implementation, the first voltage threshold is 2.4 V.

According to a second aspect, an embodiment of this application provides a battery protection board. The battery protection board is used in an electronic device. The electronic device includes a battery and a battery power acquisition circuit, a first end and a second end of the battery power acquisition circuit are configured to sample power of the battery, the second end is grounded through a voltage-regulator tube, and the battery protection board includes the over-discharge protection circuit according to any one of the first aspect.

According to a third aspect, an embodiment of this application provides an electronic device. The electronic device includes: a battery and a battery power acquisition circuit. A first end and a second end of the battery power acquisition circuit are configured to sample power of the battery, and the second end is grounded through a voltage-regulator tube. The electronic device further includes: the over-discharge protection circuit according to any one of the first aspect.

### BRIEF DESCRIPTION OF DRAWINGS

To describe the technical solutions in embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an electronic device according to an embodiment of this application;
FIG. 2 is a schematic diagram of a principle of battery leakage in an electronic device according to an embodiment of this application;
FIG. 3 is a schematic structural diagram of an over-discharge protection circuit according to an embodiment of this application;
FIG. 4 is a schematic diagram of an over-discharge protection principle of the over-discharge protection circuit shown in FIG. 3 according to an embodiment of this application;
FIG. 5 is another schematic structural diagram of an over-discharge protection circuit according to an embodiment of this application;
FIG. 6A is another schematic structural diagram of an over-discharge protection circuit according to an embodiment of this application;
FIG. 6B is a fourth schematic structural diagram of an over-discharge protection circuit according to an embodiment of this application;
FIG. 7 is another schematic structural diagram of an electronic device according to an embodiment of this application;
FIG. 8 is another schematic diagram of a principle of battery leakage in an electronic device according to an embodiment of this application;
FIG. 9 is a fifth schematic structural diagram of an over-discharge protection circuit according to an embodiment of this application;
FIG. 10 is a schematic diagram of an over-discharge protection principle of the over-discharge protection circuit shown in FIG. 9 according to an embodiment of this application;
FIG. 11 is a sixth schematic structural diagram of an over-discharge protection circuit according to an embodiment of this application;
FIG. 12 is a seventh schematic structural diagram of an over-discharge protection circuit according to an embodiment of this application;
FIG. 13 is an eighth schematic structural diagram of an over-discharge protection circuit according to an embodiment of this application; and
FIG. 14 is a ninth schematic structural diagram of an over-discharge protection circuit according to an embodiment of this application.

### DESCRIPTION OF EMBODIMENTS

Terms used in implementations of this application are merely intended to explain specific embodiments of this application rather than limit this application.

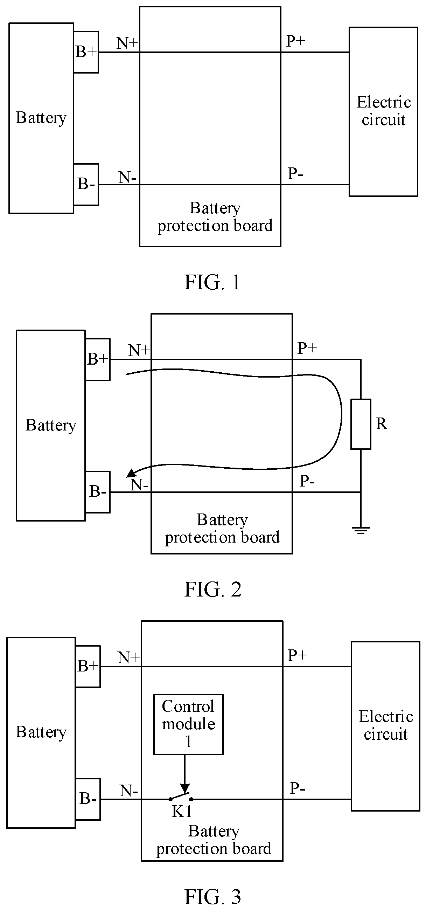

To protect a battery, a battery protection board is generally arranged for the battery in an electronic device (for example, a mobile phone). As shown in FIG. 1, for example, a battery includes a positive tab B+ and a negative tab B-, and an N+ pin and an N- pin of a battery protection board are respectively and correspondingly connected to the positive tab B+ and the negative tab B- of the battery. A P+ pin and a P- pin of the battery protection board respectively serve as a positive electrode and a negative electrode of the battery protection board, and are connected to an electric circuit of an electronic device, so that the battery may provide electric energy for the electric circuit through the P+ pin and the P- pin of the battery protection board.

After the electronic device is turned off, the electric circuit in the electronic device still exists as impedance, and may be equivalent to a grounding resistor R as shown in FIG. 2, to form an electric path between the positive tab and the negative tab of the battery as shown in FIG. 2, resulting in battery leakage. If a leakage time is long enough, battery over-discharge may occur, and this easily results in battery damage.

To solve a problem of battery over-discharge due to leakage after the electronic device is turned off, in an embodiment, an over-discharge protection circuit for the battery, also referred to as an over-discharge protection circuit, may be arranged in the battery protection board.

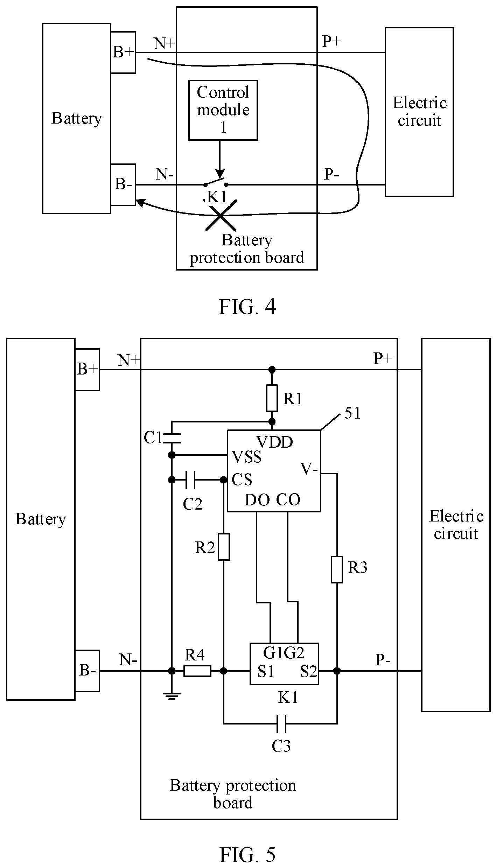

As shown in FIG. 3, the over-discharge protection circuit includes: A switch K1 is arranged between an N- pin of a battery protection board and a P- pin of the battery protection board, and a control module 1 is arranged for the switch K1 in the battery protection board. The control module 1 is configured to: after an electronic device is turned off, control the switch K1 to be turned on when a voltage of a battery is not less than a preset over-discharge voltage threshold (for example, 2.4 V), and control the switch K1 to be turned off when the voltage of the battery is less than the preset over-discharge voltage threshold (for example, 2.4 V). Therefore, as shown in FIG. 4, in a case that an electronic device is turned off, after a voltage of a battery is reduced to an over-discharge voltage threshold, a switch K1 is turned off, to disconnect a path between the battery and an electric circuit, to prevent the battery from continuing to supply power to the electric circuit through the path, that is, to prevent the battery from continuing to leak and implement over-discharge protection of the battery.

Optionally, a control module 1 may be connected to an N+ pin of a battery protection board, and sample a voltage of the N+ pin of the battery protection board. Because the N+ pin is connected to a positive tab of the battery, the control module 1 samples the voltage of the N+ pin, that is, samples the voltage of the battery, and an obtained sampled voltage is also the voltage of the battery. The control module 1 may control the switch K1 based on the sampled voltage after the electronic device is turned off.

Optionally, the control module 1 may be implemented by combining a chip and an electronic component, and the switch K1 may be implemented through a switch transistor such as a MOS transistor or a combination of switch transistors. For example, in an over-discharge protection circuit shown in FIG. 5:

A control module 1 may include: a control chip 51, resistors R1 to R4, and capacitors C1 to C3. The control chip 51 includes the following pins: a VDD pin, a VSS pin, a CS pin, a V-pin, a DO pin, and a CO pin. The VDD pin is a power supply voltage pin, the VSS pin is a grounding pin, the CS pin is a current sampling pin, the V-pin is an overcurrent/short circuit protection voltage detection pin, and the DO pin and the CO pin are digital signal output pins.

A switch K1 may include: an S1 pin, an S2 pin, a G1 pin, and a G2 pin. The G1 pin and the G2 pin are control pins for turning on or off a circuit between the S1 pin and the S2 pin in a switch 52.

Optionally, the switch K1 may be implemented through two NMOS transistors connected in series in an opposing direction, and the G1 pin and the G2 pin are respectively gates of two NMOS transistors. In this case, when the G1 pin and the G2 pin receive a high-level signal, a circuit between the S1 pin and the S2 pin in the switch K1 is turned on. When at least one of the G1 pin and the G2 pin receives a low-level signal, the circuit between the S1 pin and the S2 pin in the switch K1 is turned off.

It needs to be noted that, in FIG. 5, to cooperate with the control module 1 to implement functions such as overheat protection, and short circuit protection, an example in which the switch K1 includes two control pins is used. In another possible implementation, the switch K1 may only include one control pin. In this case, the switch K1 may be implemented through a single switch transistor such as an NMOS transistor, and this is not limited in the embodiment of this application.

Referring to FIG. 5, a connection relationship of the over-discharge protection circuit is as follows:

The S1 pin of the switch K1 is connected to an N- pin of a battery protection board through the resistor R4, the S2 pin is connected to a P- pin of the battery protection board, the G1 pin is connected to the DO pin of the control chip 51, and the G2 pin is connected to the CO pin of the control chip 51.

The VDD pin of the control chip 51 is connected to an N+ pin of the battery protection board through the resistor R1, and is grounded through the capacitor C1. The VSS pin is grounded. The CS pin is grounded through the capacitor C2, and is connected to an ungrounded end of the resistor R4 through the resistor R2. The V- pin is connected to the S2 pin of the switch K1 through the resistor R3, and the capacitor C3 is connected in series between the S1 pin and the S2 pin.

The resistor R1 in the foregoing circuit plays a buffering role, and the capacitors C1 to C3 play a filtering role.

A working principle of the over-discharge protection circuit shown in FIG. 5 is described as follows. For example, when the switch K1 receives high-level signals at the G1 pin and the G2 pin, a circuit between the S1 pin and the S2 pin is turned on.

When a battery works normally (that is, various protection functions in the battery protection board are not triggered, for example, the battery normally supplies power, or is charged or discharged), the DO pin and the CO pin of the control chip 51 may respectively output high-level signals, to control the circuit between the S1 pin and the S2 pin in the switch K1 to be turned on, so that the battery can normally supply power to an electric circuit through the battery protection board.

The VDD pin is connected to the N+ pin of the battery protection board through the resistor R1, and the N+ pin of the battery protection board is connected to a positive tab B+ of the battery. Therefore, a voltage received by the VDD pin may reflect a voltage of the positive tab B+ of the battery. When the voltage received by the VDD pin is lower than a preset over-discharge voltage threshold (for example, 2.4 V), the DO pin changes from outputting a high-level signal to outputting a low-level signal to the G1 pin, so that the circuit between the S1 pin and the S2 pin in the switch K1 is turned off, a path between the battery and the electric circuit is disconnected, and the battery stops supplying power to the electric circuit, to implement over-discharge protection of the battery. When the voltage received by the VDD pin is not lower than the over-discharge voltage threshold (for example, 2.4 V), the DO pin changes from outputting the low-level signal to outputting the high-level signal to the G1 pin, so that the circuit between the S1 pin and the S2 pin in the switch K1 is turned on, the battery supplies power to the electric circuit, and the over-discharge protection of the battery is released.

It needs to be noted that, the foregoing over-discharge protection circuit may further implement overcurrent/short circuit protection and overheat protection. Specifically:

The V- pin is connected to the S2 pin of the switch K1 through the resistor R3, to perform current detection on a branch composed of the resistor R4 and the switch K1 between the N- pin and the P- pin in a battery circuit board. When a detected current exceeds a preset current threshold, the DO pin turns to output a low-level signal to the G1 pin, so that a circuit between the S1 pin and the S2 pin in the switch K1 is turned off, and the battery stops supplying power to the electric circuit, to implement overcurrent/short circuit protection. When the detected current does not exceed the preset current threshold, the DO pin turns to output a high-level signal to the G1 pin, so that the circuit between the S1 pin and the S2 pin in the switch K1 is turned on, the battery supplies power to the electric circuit, and the overcurrent/short circuit protection is released.

The CS pin is connected to the ungrounded end of the resistor R4 through the resistor R2, the resistor R4 may be a positive temperature coefficient thermistor, and the CS pin samples a voltage at two ends of the resistor R4 by detecting a current. When it is detected that the current exceeds the preset current threshold, the DO pin turns to output the low-level signal to the G1 pin, so that the circuit between the S1 pin and the S2 pin in the switch K1 is turned off, and the battery stops supplying power to the electric circuit, to implement overheat protection. When the detected current does not exceed the preset current threshold, the DO pin turns to output the high-level signal to the G1 pin, so that the circuit between the S1 pin and the S2 pin in the switch K1 is turned on, the battery supplies power to the electric circuit, and the overheat protection is released.

It needs to be noted that, in the foregoing cases, the pin that outputs the low-level signal may also be replaced by the CO pin, which may also implement the foregoing protection of leakage, overcurrent/short circuit, overheat, and the like.

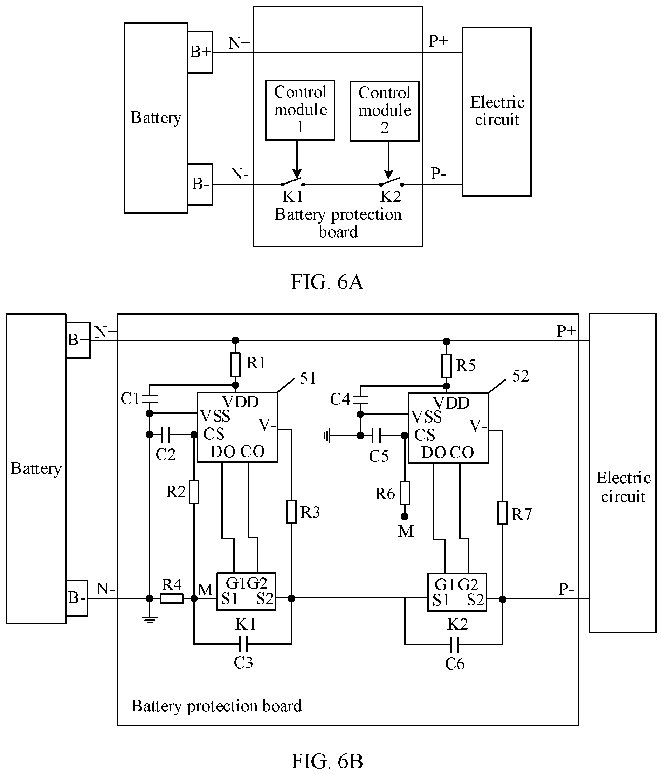

Optionally, to ensure reliability of working of the over-discharge protection circuit, as shown in FIG. 6A, another group of over-discharge protection circuits composed of a control module 2 and a switch K2 may be added on the basis of the circuit shown in FIG. 3. An implementation of the control module 2 is the same as that of the control module 1, and an implementation of the switch K2 is the same as that of the switch K1, to ensure that when one group of over-discharge protection circuits is faulty, the other group of over-discharge protection circuits can implement over-discharge protection. Referring to FIG. 5, a more specific circuit implementation structure of the over-discharge protection circuit shown in FIG. 6A is, for example, shown in FIG. 6B. Connection relationships and working principles among the control module 2, the switch K2, a fifth resistor R5 to a seventh resistor R7, and a fourth capacitor C4 to a sixth capacitor C6 in FIG. 6B are not described herein again, but may be referred to a corresponding description in FIG. 5. It needs to be noted that, in a circuit structure shown in FIG. 6B, two groups of over-discharge protection circuits multiplex a resistor R4 for overheat protection.

Although a battery protection board provides the foregoing over-discharge protection circuit, an electronic device may still have a problem of battery leakage, and then a battery is damaged due to battery over-discharge.

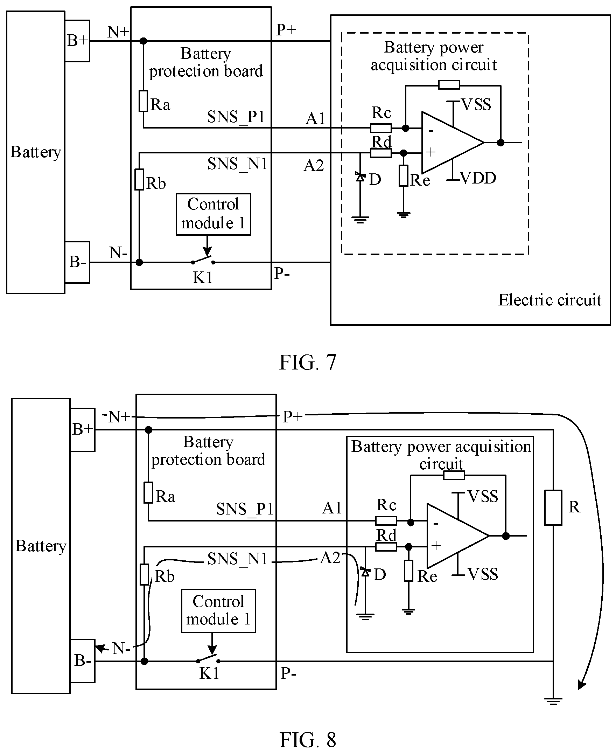

After analysis, as shown in FIG. 7, an SNS_P1 pin and an SNS_N1 pin are further arranged on a battery protection board. The SNS_P1 pin may be connected to an N+ pin of the battery protection board through a resistor Ra, and the SNS_N1 pin may be connected to an N- pin of the battery protection board through a resistor Rb. The resistor Ra and the resistor Rb play a buffering role.

As shown in FIG. 7, the SNS_P1 pin and the SNS_N1 pin arranged on the battery protection board may be correspondingly connected to a first end A1 and a second end A2 of a battery power acquisition circuit outside the battery protection board, to support the battery power acquisition circuit to perform battery power acquisition. Power information acquired by the battery power acquisition circuit may be sent to a processor of an electronic device, and the processor may, based on the power information, prompt battery power to a user and control charging and discharging of a battery. In the battery power acquisition circuit, a grounded Zener diode D is arranged at the second end A2, to perform voltage stabilization on the battery power acquisition circuit.

Based on the foregoing description, an electric circuit of the electronic device may still be equivalent to a grounded resistor R. In this case, an equivalent circuit of a circuit shown in FIG. 7 is, for example, shown in FIG. 8.

It can be learned from FIG. 8 that, there is a path from a positive tab B+ of a battery, through an N+ pin and a P+ pin of a battery protection board, an equivalent resistor R of an electric circuit, a Zener diode D, an SNS_N1 pin of the battery protection board, from a resistor Rb to an N- pin of the battery protection board, and then to a negative tab B- of the battery in an electronic device. The path discharges the battery when the electronic device is turned off, and even when a switch K1 of the battery protection board is turned off, the path still exists and discharges the battery, so that a problem of battery damage caused by battery over-discharge still occurs in a case that the battery protection board has the over-discharge protection function shown in the foregoing embodiments.

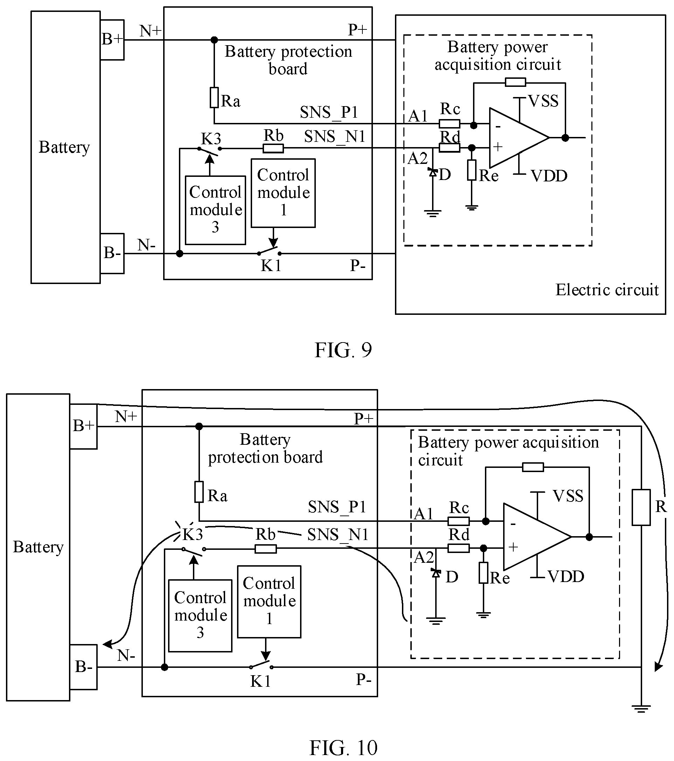

Therefore, an embodiment of this application further provides another schematic structural diagram of an over-discharge protection circuit, to solve the problem of battery over-discharge caused by the cases shown in FIG. 7 and FIG. 8, reduce power consumption and battery damage of the battery, and improve user experience. As shown in FIG. 9, a difference between the over-discharge protection circuit and the over-discharge protection circuit shown in FIG. 7 is mainly as follows: A switch K3 and a control module 3 of the switch K3 are added on a branch at which a resistor Rb between an N- pin and an SNS_N1 pin of a battery protection board is located. Specifically:

The N- pin of the battery protection board is connected to the SNS_N1 pin through the switch K3 and the resistor Rb that are connected in series.

The control module 3 is connected to a control end of the switch K3, and the control module 3 is configured to: after an electronic device is turned off, control the switch K3 to be turned on when a voltage of a battery is not less than a preset first voltage threshold (for example, 2.4 V), and control the switch K3 to be turned off when the voltage of the battery is less than the preset first voltage threshold (for example, 2.4 V).

A first voltage threshold may be the same as or different from the over-discharge voltage threshold in the foregoing embodiments, and this is not limited in the embodiment of this application.

In a circuit shown in FIG. 9, an electric circuit is equivalent to a grounding resistor R, and the circuit in FIG. 9 may be equivalent to a circuit structure shown in FIG. 10. In a case that the electronic device is turned off, when the voltage of the battery is reduced to a value less than the preset first voltage threshold, the switch K3 is turned off, to disconnect the path from the positive tab of the battery, through the P+ pin of the battery protection board, the electric circuit, and the SNS_N1 pin of the battery protection board, and to the negative tab of the battery shown in FIG. 8, to prevent the battery from continuing to supply power to the electric circuit through the path, that is, to prevent the battery from continuing to leak and implement over-discharge protection of the battery.

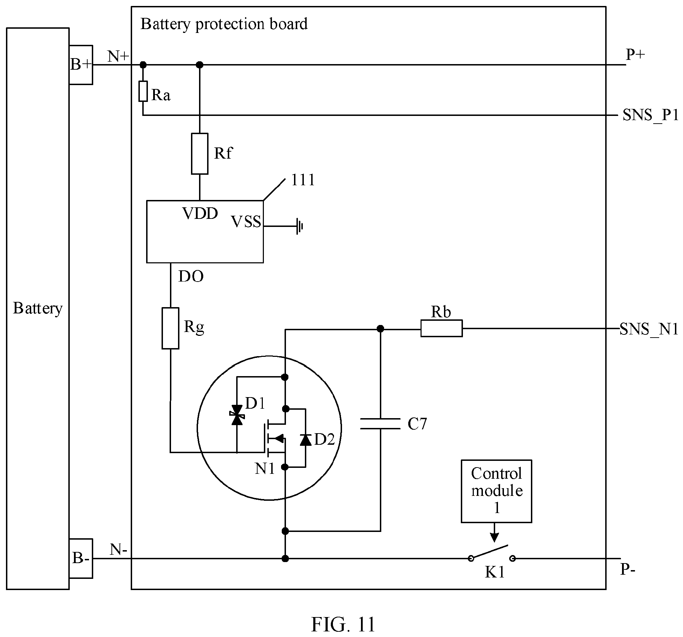

Referring to FIG. 11, the switch K3 in the over-discharge protection circuit shown in FIG. 9 may include: an NMOS transistor N1. A source of the NMOS transistor N1 is connected to an N- pin of a battery protection board, and a drain of the NMOS transistor N1 is connected to an SNS_N1 pin of the battery protection board through a resistor Rb.

A control module 3 may include: a control chip 111. The control chip 111 may include a VDD pin, a VSS pin, and a DO pin. The VDD pin may be connected to an N+ pin of the battery protection board through a resistor Rf, the VSS pin is grounded, and the DO pin is connected to a gate of the NMOS transistor N1 through a resistor Rg.

Optionally, to prevent an insulating layer between the gate and the source of the NMOS transistor N1 from being broken down by voltage, as shown in FIG. 11, the switch K3 further includes: The gate of the NMOS transistor N1 is connected to the source of the NMOS transistor N1 through a bidirectional Zener diode D1.

It needs to be noted that, a diode D2 connected in series between the source and the drain of the NMOS transistor N1 is a body diode of the NMOS transistor N1.

It needs to be noted that, the resistor Rf and the resistor Rg mainly play a buffering role.

A working principle of a circuit composed of the control module 3 and the switch K3 in FIG. 11 is described as follows:

The VDD pin of the control chip 111 is connected to the N+ pin of the battery protection board through the resistor Rf, and the N+ pin of the battery protection board is connected to a positive tab B+ of the battery. Therefore, a voltage received by the VDD pin may reflect a voltage of the positive tab B+ of the battery. When the voltage received by the VDD pin is lower than a preset first voltage threshold (for example, 2.4 V), the DO pin changes from outputting a high-level signal to outputting a low-level signal to the gate of the NMOS transistor N1, so that the NMOS transistor N1 is turned off, a path between the battery and the electric circuit is disconnected, and the battery stops supplying power to the electric circuit, to implement over-discharge protection of the battery. When the voltage received by the VDD pin is not lower than the preset first voltage threshold (for example, 2.4 V), the DO pin changes from outputting the low-level signal to outputting the high-level signal to the gate of the NMOS transistor N1, so that the NMOS transistor N1 is turned on, the battery supplies power to the electric circuit, and the over-discharge protection of the battery is released.

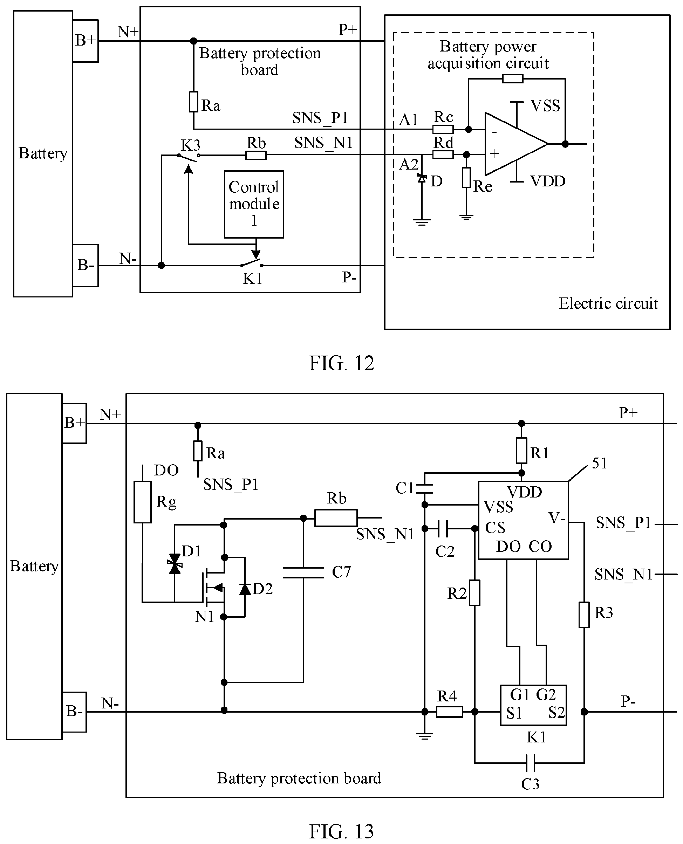

To reduce an area of the battery protection board based on the over-discharge protection circuit shown in FIG. 11, an embodiment of this application provides a schematic structural diagram of another over-discharge protection circuit. As shown in FIG. 12, a switch K3 and a switch K1 multiplex a control module 1. In this case, a control end of the switch K3 may be connected to the control module 1, so that when a voltage of a battery is less than a preset over-discharge protection threshold, the control module 1 simultaneously controls the switch K3 and the switch K1 to be turned off, to disconnect two paths formed between the battery and the electric circuit respectively through the SNS_N1 pin and the P-pin of the battery protection board in the foregoing embodiments. A specific implementation structure of the circuit shown in FIG. 12 is shown in FIG. 13. Specific circuit structures of a control module 1 and a switch K1 may be referred to corresponding descriptions in FIG. 5. In addition, a gate of an NMOS transistor N1 is connected to a DO pin of a control chip 51 through a resistor Rg, so that the control module 1 simultaneously controls the NMOS transistor N1 and the switch K1 to be turned off when a voltage of a battery is less than a preset over-discharge protection threshold, and a battery no longer leaks through the foregoing two paths.

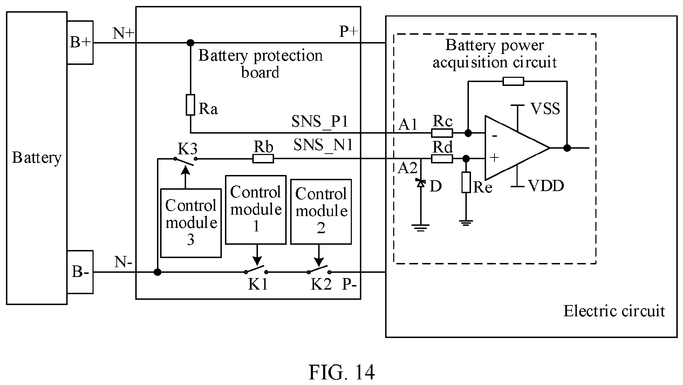

With reference to the over-discharge protection circuit shown in FIG. 6A, in another embodiment of the over-discharge protection circuit provided in the embodiments of this application, another group of over-discharge protection circuits composed of a control module 2 and a switch K2 may be added on the basis of the over-discharge protection circuit shown in FIG. 9 to FIG. 13. An implementation of the control module 2 is the same as that of the control module 1, and an implementation of the switch K2 is the same as that of the switch K1, to ensure that when one group of over-discharge protection circuits is faulty, the other group of over-discharge protection circuits can implement over-discharge protection. For example, as shown in FIG. 14, the control module 2 and the switch K2 are added in FIG. 9, and a specific connection relationship of the circuit is not described herein again.

Specific implementations of the control module 1, the control module 2, the switch 1, and the switch 2 in FIG. 9 to FIG. 14 may be referred to corresponding descriptions in FIG. 5 and FIG. 6B above and are not described herein again.

It needs to be noted that, referring to FIG. 11, if the switch K1 to the switch K2, the control module 2, and the control module 1 are arranged in the battery protection board, the switch K3 may also multiplex the control module 2 with the switch K2. In this case, the control end of the switch K3 may be connected to the control module 2, so that when the voltage of the battery is less than the preset over-discharge protection threshold, the control module 2 simultaneously controls the switch K3 and the switch K1 to be turned off, to disconnect the two paths.

This application further provides a battery protection board. The battery protection board includes the over-discharge protection circuit shown in any one of the foregoing embodiments.

This application further provides an electronic device. The electronic device includes a battery, a battery protection board, and an electric circuit, and the battery protection board includes the over-discharge protection circuit shown in any one of the foregoing embodiments.

The foregoing descriptions are merely specific implementations of this application, and any change or replacement readily figured out by a person skilled in the art within the technical scope disclosed in this application shall fall within the protection scope of this application. The protection scope of this application shall be subject to the protection scope of the claims.

## Claims

1. An over-discharge protection circuit, for an electronic device, wherein the electronic device comprises a battery and a battery power acquisition circuit, a first end (A1) and a second end (A2) of the battery power acquisition circuit are configured to sample power of the battery, the second end (A2) is grounded through a voltage-regulator tube, and the over-discharge protection circuit comprises:
a first end (N+) of the over-discharge protection circuit is configured to connect a positive tab (B+) of the battery, and a second end (N-) of the over-discharge protection circuit is configured to connect a negative tab (B-) of the battery; a third end (SNS_P1) and a fourth end (SNS_N1) of the over-discharge protection circuit are configured to correspondingly connect the first end (A1) and the second end (A2) of the battery power acquisition circuit;
the first end (N+) of the over-discharge protection circuit is connected to the third end (SNS_P1) of the over-discharge protection circuit;
the second end (N-) of the over-discharge protection circuit is connected to the fourth end (SNS_N1) of the over-discharge protection circuit through a first switch (K3); and
a first control module (3) is connected to a first control end of the first switch (K3), and the first control module (3) is configured to: after the electronic device is turned off, control the first switch (K3) to be turned off when a voltage of the battery is lower than a preset first voltage threshold, and control the first switch (K3) to be turned on when the voltage of the battery is not lower than the preset first voltage threshold, wherein the over-discharge protection circuit further comprises: a second control module (1) and a second switch (K1), wherein
the first end (N+) of the over-discharge protection circuit is connected to a fifth end (P+) of the over-discharge protection circuit, the second end (N-) of the over-discharge protection circuit is connected to a sixth end (P-) of the over-discharge protection circuit through the second switch (K1), and the fifth end (P+) and the sixth end (N-) of the over-discharge protection circuit are configured to supply power to an electric circuit of the electronic device; and
the second control module (1) is connected to a first control end of the second switch (K1), and
the second control module (1) is configured to: after the electronic device is turned off, control the second switch (K1) to be turned off when the voltage of the battery is lower than a preset second voltage threshold, and control the second switch (K1) to be turned on when the voltage of the battery is not lower than the preset second voltage threshold, wherein the first switch (K3) is arranged in a branch in which a first resistor (Rb) is located, the branch is branching from the connection between the second end (N-) and the sixth end (P-) of the over-discharge protection circuit.

2. The circuit according to claim 1, wherein that the second end (N-) of the overdischarge protection circuit is connected to the fourth end (SNS_N1) of the over-discharge protection circuit through a first switch (K3) comprises:
the second end (N-) of the over-discharge protection circuit is connected to the fourth end (SNS_N1) of the over-discharge protection circuit through the first switch (K3) and a first resistor (Rb) that are connected in series.

3. The circuit according to any one of claims 1 to 2, wherein the first switch (K3) comprises: an NMOS transistor (N1), wherein
a source of the NMOS transistor (N1) is connected to the second end (N-) of the over-discharge protection circuit, a drain of the NMOS transistor (N1) is connected to the fourth end (SNS_N1) of the overdischarge protection circuit, and a gate of the NMOS transistor (N1) is connected to the first control module (3).

4. The circuit according to claim 3, wherein the first control module (3) comprises:
a first pin (VDD) of a control chip (11) is configured to connect the positive tab (B+) of the battery, a second pin (VSS) of the control chip (11) is grounded, and a third pin (DO) of the control chip (11) is connected to the first control end of the first switch (K3); and
the control chip (11) is configured to: after the electronic device is turned off, output a first voltage signal from the third pin (DO) to the first control end of the first switch (K3) when a voltage of the first pin (VDD) is not less than the preset first voltage threshold, wherein the first voltage signal is used for controlling the first switch (K3) to be turned on; and output a second voltage signal from the third pin (DO) to the first control end of the first switch (K3) when the voltage of the first pin (VDD) is less than the preset first voltage threshold, wherein the second voltage signal is used for controlling the first switch (K3) to be turned off.

5. The circuit according to claim 3, wherein the first switch (K3) further comprises: a first capacitor (C7) is connected in series between the source and the drain of the NMOS transistor (N1).

6. The circuit according to claim 3, wherein that a first control module (3) is connected to a first control end of the first switch (K3) comprises:
the first control module (3) is connected to the first control end of the first switch (K3) through a second resistor (Rg).

7. An electronic device, comprising: a battery and a battery power acquisition circuit, wherein a first end (A1) and a second end (A2) of the battery power acquisition circuit are configured to sample power of the battery, and the second end (N-) is grounded through a voltage-regulator tube; and the electronic device further comprises: the over-discharge protection circuit according to any one of claims 1 to 6.

## Patentansprüche

1. Eine Tiefentladeschutzschaltung für ein elektronisches Gerät, wobei das elektronische Gerät eine Batterie und eine Batterie-Leistungsaufnahmeschaltung umfasst, ein erstes Ende (A1) und ein zweites Ende (A2) der Batterie-Leistungsaufnahmeschaltung zum Abtasten der Batterieleistung konfiguriert sind, das zweite Ende (A2) über eine Spannungsreglerröhre geerdet ist, und die Tiefentladeschutzschaltung umfasst:
ein erstes Ende (N+) der Tiefentladeschutzschaltung ist zum Anschluss eines positiven Anschlusspunkts (B+) der Batterie konfiguriert, und ein zweites Ende (N-) der Tiefentladeschutzschaltung ist zum Anschluss eines negativen Anschlusspunkts (B-) der Batterie konfiguriert; ein drittes Ende (SNS_P1) und ein viertes Ende (SNS_N1) der Tiefentladeschutzschaltung sind zum entsprechenden Anschluss des ersten Endes (A1) und des zweiten Endes (A2) der Batterie-Leistungsaufnahmeschaltung konfiguriert;
das erste Ende (N+) der Tiefentladeschutzschaltung ist mit dem dritten Ende (SNS_P1) der Tiefentladeschutzschaltung verbunden;
das zweite Ende (N-) der Tiefentladeschutzschaltung ist über einen ersten Schalter (K3) mit dem vierten Ende (SNS_N1) der Tiefentladeschutzschaltung verbunden; und
ein erstes Steuermodul (3) ist mit einem ersten Steuerende des ersten Schalters (K3) verbunden, und das erste Steuermodul (3) ist so konfiguriert, dass: nach dem Ausschalten des elektronischen Geräts der erste Schalter (K3) ausgeschaltet wird, wenn die Spannung der Batterie unter einem voreingestellten ersten Spannungsschwellenwert liegt, und der erste Schalter (K3) eingeschaltet wird, wenn die Spannung der Batterie nicht unter dem voreingestellten ersten Spannungsschwellenwert liegt, wobei die Tiefentladeschutzschaltung ferner umfasst: ein zweites Steuermodul (1) und einen zweiten Schalter (K1), wobei
das erste Ende (N+) der Tiefentladeschutzschaltung mit einem fünften Ende (P+) der Tiefentladeschutzschaltung verbunden ist, das zweite Ende (N-) der Tiefentladeschutzschaltung über den zweiten Schalter (K1) mit einem sechsten Ende (P-) der Tiefentladeschutzschaltung verbunden ist, und das fünfte Ende (P+) und das sechste Ende (N-) der Tiefentladeschutzschaltung zur Stromversorgung einer elektrischen Schaltung des elektronischen Geräts konfiguriert sind; und
Das zweite Steuermodul (1) ist mit einem ersten Steueranschluss des zweiten Schalters (K1) verbunden und das zweite Steuermodul (1) ist so konfiguriert, dass: nachdem das elektronische Gerät ausgeschaltet ist, der zweite Schalter (K1) ausgeschaltet wird, wenn die Spannung der Batterie unter einen voreingestellten zweiten Spannungsschwellenwert fällt, und der zweite Schalter (K1) eingeschaltet wird, wenn die Spannung der Batterie nicht unter dem voreingestellten zweiten Spannungsschwellenwert liegt. Dabei ist der erste Schalter (K3) in einem Zweig angeordnet, in dem sich ein erster Widerstand (Rb) befindet, wobei der Zweig von der Verbindung zwischen dem zweiten Anschluss (N-) und dem sechsten Anschluss (P-) der Tiefentladeschutzschaltung abzweigt.

2. Die Schaltung gemäß Anspruch 1, wobei das zweite Ende (N-) der Tiefentladeschutzschaltung mit dem vierten Ende (SNS_N1) der Tiefentladeschutzschaltung über einen ersten Schalter (K3) verbunden ist, umfasst:
Das zweite Ende (N-) der Tiefentladeschutzschaltung ist mit dem vierten Ende (SNS_N1) der Tiefentladeschutzschaltung über den ersten Schalter (K3) und einen in Reihe geschalteten ersten Widerstand (Rb) verbunden.

3. Die Schaltung gemäß einem der Ansprüche 1 bis 2, wobei der erste Schalter (K3) umfasst: einen NMOS-Transistor (N1), wobei
die Source des NMOS-Transistors (N1) mit dem zweiten Ende (N-) der Tiefentladeschutzschaltung verbunden ist, der Drain des NMOS-Transistors (N1) mit dem vierten Ende (SNS_N1) der Tiefentladeschutzschaltung verbunden ist, und das Gate des NMOS-Transistors (N1) mit dem ersten Steuermodul (3) verbunden ist.

4. Die Schaltung gemäß Anspruch 3, wobei das erste Steuermodul (3) umfasst:
Ein erster Pin (VDD) eines Steuerchips (11) ist zum Anschluss an die positive Lasche (B+) der Batterie konfiguriert, ein zweiter Pin (VSS) des Steuerchips (11) ist geerdet und ein dritter Pin (DO) des Steuerchips (11) ist mit dem ersten Steueranschluss des ersten Schalters (K3) verbunden; und
Der Steuerchip (11) ist so konfiguriert, dass: nachdem das elektronische Gerät ausgeschaltet ist, ein erstes Spannungssignal vom dritten Pin (DO) an den ersten Steueranschluss des ersten Schalters (K3) ausgegeben wird, wenn die Spannung des ersten Pins (VDD) nicht unter dem voreingestellten ersten Spannungsschwellenwert liegt, wobei das erste Spannungssignal zur Steuerung des ersten Schalters (K3) auf EIN verwendet wird; und ein zweites Spannungssignal vom dritten Pin (DO) an den ersten Steueranschluss des ersten Schalters (K3) ausgegeben wird, wenn die Spannung des ersten Pins (VDD) unter dem voreingestellten ersten Spannungsschwellenwert liegt, wobei das zweite Spannungssignal zur Steuerung des ersten Schalters (K3) auf AUS verwendet wird.

5. Schaltung nach Anspruch 3, wobei der erste Schalter (K3) ferner umfasst: ein erster Kondensator (C7) ist zwischen Source und Drain des NMOS-Transistors (N1) in Reihe geschaltet.

6. Schaltung nach Anspruch 3, wobei ein erstes Steuermodul (3) mit einem ersten Steueranschluss des ersten Schalters (K3) verbunden ist, umfasst:
das erste Steuermodul (3) ist über einen zweiten Widerstand (Rg) mit dem ersten Steueranschluss des ersten Schalters (K3) verbunden.

7. Elektronisches Gerät, umfassend: eine Batterie und eine Batteriestrom-Erfassungsschaltung, wobei
ein erstes Ende (A1) und ein zweites Ende (A2) der Batteriestrom-Erfassungsschaltung zum Abtasten der Batterieenergie ausgelegt sind, und das zweite Ende (N-) über eine Spannungsreglerröhre geerdet ist; und das elektronische Gerät ferner umfasst: die Tiefentlade-Schutzschaltung gemäß einem der Ansprüche 1 bis 6.

## Revendications

1. Un circuit de protection contre la décharge excessive, destiné à un dispositif électronique, ledit dispositif électronique comprenant une batterie et un circuit d'acquisition de puissance de la batterie, une première extrémité (A1) et une seconde extrémité (A2) du circuit d'acquisition de puissance de la batterie étant configurées pour échantillonner la puissance de la batterie, la seconde extrémité (A2) étant reliée à la terre via une diode de régulation de tension, et le circuit de protection contre la décharge excessive comprenant :
une première extrémité (N+) du circuit de protection contre la décharge excessive est conçue pour être connectée à la borne positive (B+) de la batterie, et une seconde extrémité (N-) du circuit de protection contre la décharge excessive est conçue pour être connectée à la borne négative (B-) de la batterie ; une troisième extrémité (SNS_P1) et une quatrième extrémité (SNS_N1) du circuit de protection contre la décharge excessive sont conçues pour correspondre respectivement à la première extrémité (A1) et à la seconde extrémité (A2) du circuit d'acquisition de puissance de la batterie ;
la première extrémité (N+) du circuit de protection contre la décharge excessive est reliée à la troisième extrémité (SNS_P1) du circuit de protection contre la décharge excessive ;
la seconde extrémité (N-) du circuit de protection contre la décharge excessive est reliée à la quatrième extrémité (SNS_N1) du circuit de protection contre la décharge excessive via un premier commutateur (K3) ; et
un premier module de commande (3) est connecté à une première extrémité de commande du premier commutateur (K3), et le premier module de commande (3) est conçu pour : après l'extinction du dispositif électronique, commander l'arrêt du premier commutateur (K3) lorsque la tension de la batterie est inférieure à un premier seuil de tension prédéfini, et commander l'activation du premier commutateur (K3) lorsque la tension de la batterie n'est pas inférieure au premier seuil de tension prédéfini ; le circuit de protection contre la décharge excessive comportant en outre : un second module de commande (1) et un second commutateur (K1), dans lequel
la première extrémité (N+) du circuit de protection contre la décharge excessive est reliée à une cinquième extrémité (P+) du circuit de protection contre la décharge excessive, la seconde extrémité (N-) du circuit de protection contre la décharge excessive est reliée à une sixième extrémité (P-) du circuit de protection contre la décharge excessive via le second commutateur (K1), et la cinquième extrémité (P+) et la sixième extrémité (N-) du circuit de protection contre la décharge excessive sont conçues pour alimenter un circuit électrique du dispositif électronique ; et
le deuxième module de commande (1) est connecté à une première borne de commande du second interrupteur (K1), et le deuxième module de commande (1) est conçu pour : après l'extinction du dispositif électronique, commander la mise hors tension du second interrupteur (K1) lorsque la tension de la batterie est inférieure à un second seuil de tension prédéfini, et
commander la mise sous tension du second interrupteur (K1) lorsque la tension de la batterie n'est pas inférieure au second seuil de tension prédéfini, le premier interrupteur (K3) étant disposé dans une branche dans laquelle se trouve une première résistance (Rb), la branche étant dérivée de la connexion entre la seconde extrémité (N-) et la sixième extrémité (P-) du circuit de protection contre la décharge excessive.

2. Le circuit selon la revendication 1, **caractérisé en ce que** la seconde extrémité (N-) du circuit de protection contre la décharge excessive est connectée à la quatrième extrémité (SNS_N1) du circuit de protection contre la décharge excessive via un premier interrupteur (K3), comprenant : la seconde extrémité (N-) du circuit de protection contre la décharge excessive est reliée à la quatrième extrémité (SNS_N1) du circuit de protection contre la décharge excessive via le premier interrupteur (K3) et une première résistance (Rb) qui sont connectés en série.

3. Le circuit selon l'une quelconque des revendications 1 à 2, **caractérisé en ce que** le premier interrupteur (K3) comprend : un transistor NMOS (N1), dans lequel
la source du transistor NMOS (N1) est connectée à la seconde extrémité (N-) du circuit de protection contre la décharge excessive, le drain du transistor NMOS (N1) est connecté à la quatrième extrémité (SNS_N1) du circuit de protection contre la décharge excessive, et la grille du transistor NMOS (N1) est connectée au premier module de commande (3).

4. Le circuit selon la revendication 3, **caractérisé en ce que** le premier module de commande (3) comprend :
une première broche (VDD) d'une puce de contrôle (11) est conçue pour se connecter à la borne positive (B+) de la batterie, une seconde broche (VSS) de la puce de contrôle (11) est reliée à la masse, et une troisième broche (DO) de la puce de contrôle (11) est connectée à la première borne de commande du premier interrupteur (K3) ; et
La puce de contrôle (11) est conçue pour : après l'extinction du dispositif électronique, délivrer un premier signal de tension à partir de la troisième broche (DO) vers la première borne de commande du premier interrupteur (K3) lorsque la tension de la première broche (VDD) n'est pas inférieure au premier seuil de tension prédéfini, ledit premier signal de tension étant utilisé pour commander l'activation du premier interrupteur (K3) ; et délivrer un second signal de tension à partir de la troisième broche (DO) vers la première borne de commande du premier interrupteur (K3) lorsque la tension de la première broche (VDD) est inférieure au premier seuil de tension prédéfini, ledit second signal de tension étant utilisé pour commander la désactivation du premier interrupteur (K3).

5. Le circuit selon la revendication 3, dans lequel le premier interrupteur (K3) comprend en outre : un premier condensateur (C7) connecté en série entre la source et le drain du transistor NMOS (N1).

6. Le circuit selon la revendication 3, dans lequel un premier module de commande (3) est connecté à une première extrémité de commande du premier interrupteur (K3), comprend : le premier module de commande (3) est connecté à la première extrémité de commande du premier interrupteur (K3) par l'intermédiaire d'une seconde résistance (Rg).

7. Un dispositif électronique, comprenant : une batterie et un circuit d'acquisition de la puissance de la batterie, dans lequel
une première extrémité (A1) et une seconde extrémité (A2) du circuit d'acquisition de la puissance de la batterie sont configurées pour échantillonner la puissance de la batterie, et la seconde extrémité (N-) est mise à la terre par l'intermédiaire d'une diode régulatrice de tension ; et le dispositif électronique comprend en outre : le circuit de protection contre la décharge excessive selon l'une quelconque des revendications 1 à 6.
